# FASCICULE DE BREVET EUROPEEN

(11) **EP 3 458 253 B1**
(45) Date de publication et mention de la délivrance du brevet: **01.07.2020**
(21) Numéro de dépôt: 17729183.8
(22) Date de dépôt: 22.05.2017
(51) Int. Cl.: B29D 30/36, B29D 30/32, B29D 30/00, B29D 30/08

(54) **PROCÉDÉ ET INSTALLATION DE RETROUSSAGE D'UNE ÉBAUCHE DE PNEUMATIQUE**
VERFAHREN UND VORRICHTUNG ZUR UMSCHLAGUNG EINES REIFENROHLINGS
METHOD AND PROCESS FOR TURNING UP A TIRE STRUCTURE MEMBER.

(30) Priorité: 20.05.2016 FR 1654515; 22.12.2016 FR 1663236
(43) Date de publication de la demande: 27.03.2019
(73) Titulaire: Compagnie Générale des Etablissements Michelin, 63000 Clermont-Ferrand (FR)
(72) Inventeur: MASSOPTIER-DAVID, Michaël, 63040 Clermont-Ferrand Cedex 9 (FR); MONNEREAU, Patrice, 63040 Clermont-Ferrand Cedex 9 (FR)
(74) Mandataire: Redouté, Gilles Pierre
(86) Numéro de dépôt international: PCT/FR2017/051249
(87) Numéro de publication internationale: WO 2017/198974

(56) Documents cités:
- EP-A2- 1 182 028
- JP-A- 2010 260 220
- US-A1- 2006 180 263
- US-A1- 2008 257 478

## Description

L'invention concerne le retroussage d'ébauches de pneumatiques.

La fabrication d'une ébauche de pneumatique comprend une étape de retroussage qui consiste à appliquer une couche de gomme crue sur des flancs d'une ébauche de carcasse de pneumatique. Cette étape a pour but, d'une part, de fixer la couche de gomme crue sur chacun des flancs de l'ébauche de carcasse, et, d'autre part, d'emprisonner une tringle, destinée à améliorer des propriétés mécaniques du pneumatique.

On connait une installation comprenant un fût, un support monté coulissant par rapport au fût, des bras articulés au support et des moyens de guidage, fixés sur le fût, pour guider des extrémités libres des bras.

Une telle installation fonctionne de la manière suivante. On installe l'ébauche de carcasse sur le fût. La couche de gomme a initialement une configuration cylindrique et recouvre les bras appliqués le long du fût, parallèlement les uns aux autres. Des moyens d'entrainement, par exemple formés par un vérin pneumatique fixé au fût et interne à ce dernier, font coulisser le support, et donc également les bras, en direction de l'ébauche. Les bras entrainent la couche de gomme qui amorce ainsi un retournement. Lorsque les extrémités libres des bras arrivent en contact avec les moyens de guidage, ces derniers contraignent les bras à tourner par rapport au support dans le but de faire glisser les bras le long des flancs de l'ébauche pour appliquer la couche de gomme crue. En particulier, la rotation des bras est commandée par le coulissement du support grâce aux moyens de guidage.

Une telle installation présente certains inconvénients.

En effet, les bras sont entrainés en translation et en rotation par le vérin pneumatique. De ce fait, la pression d'applique se décompose en un effort d'applique du produit et en un effort de rotation des bras. La composante de rotation étant faible quand les bras sont en position basse, il faut un effort d'applique bien supérieur au besoin du produit afin de faire tourner les bras pour leur relevage. Cela peut nuire à sa bonne fixation sur l'ébauche, car l'application d'une pression trop importante sur la couche de gomme a pour effet de la laminer et donc de la détériorer. De plus, si l'ébauche et les flancs sont maintenus en position par une vessie gonflable, l'application d'un effort par les bras sur les flancs peut engendrer une déformation des flancs vers l'intérieur de l'ébauche. Cela a pour effet de modifier la pression appliquée lors du retroussage. Un vérin pneumatique ne permettant pas de prendre en compte les déformations des flancs de l'ébauche, la qualité du retroussage s'en trouve diminuée. Les documents US 2006/0180263 A1 et US 2008/0257478 A1 présentent des variantes de procédés et installations de retroussage d'une ébauche de pneumatique à l'aide de bras de retroussage.

Un but de l'invention est d'améliorer la qualité du retroussage d'une ébauche de pneumatique.

A cet effet, on prévoit selon l'invention un procédé de retroussage d'une ébauche de pneumatique, dans lequel on commande des déplacements longitudinal et radial, par référence à un axe principal de l'ébauche, indépendamment l'un de l'autre, de bras de retroussage afin d'appliquer un élément en gomme sur au moins un flanc de l'ébauche dans lequel on pilote le déplacement radial des bras au moyen d'une consigne en vitesse.

Ainsi, grâce au pilotage des déplacements longitudinal et radial, indépendamment l'un de l'autre, lorsqu'on impose une consigne de vitesse au déplacement radial, on peut piloter le déplacement des bras de manière à ce qu'ils appliquent sur la couche de gomme, dans la bonne position le long du flanc de l'ébauche, un effort d'intensité prédéterminée permettant une bonne fixation de la couche de gomme sur le flanc. On améliore ainsi la qualité du pneumatique fabriqué et la reproductibilité du retroussage.

De plus, le pilotage du déplacement des bras au moyen de la consigne en vitesse permet de maîtriser la vitesse des bras tout le long du retroussage. Cela contribue à améliorer la reproductibilité du retroussage.

Selon un premier mode de réalisation de l'invention, on impose une vitesse au déplacement radial et on impose un effort au déplacement longitudinal

Ce premier mode de réalisation permet d'obtenir une meilleure qualité de retroussage et une excellente maîtrise de l'effort d'applique.

Selon un deuxième mode de réalisation de l'invention, on impose une vitesse au déplacement longitudinal des bras et on impose une vitesse au déplacement radial des bras.

Ce deuxième mode de réalisation présente l'avantage d'être simple à mettre en oeuvre mais avec une moindre maitrise de l'effort d'applique.

On améliore ainsi davantage la reproductibilité du retroussage. Cela permet par ailleurs de mieux adapter la consigne d'effort à la position des bras, puisque celle-ci est connue en tout point de la trajectoire des bras.

Avantageusement, on commande le déplacement radial des bras en les faisant tourner par rapport à l'ébauche.

Le déplacement radial des bras peut ainsi être réalisé par des moyens simples.

Avantageusement, on arrête le déplacement des bras à une position prédéterminée et on applique un effort prédéterminé sur l'ébauche.

Un tel protocole de commande comportant des déplacements des bras suivis de pauses pour presser la couche de gomme permet d'améliorer son adhérence à l'ébauche.

Avantageusement, on déplace chaque bras de sorte que, dans une portion de la trajectoire du bras, le bras présente une composante de mouvement qui l'éloigne d'un plan équatorial de l'ébauche.

On peut ainsi adapter le procédé au retroussage d'une ébauche ayant un profil dit « en oméga », c'est-à-dire présentant un relief sur chacun de ses deux flancs qui oblige à un recul partiel de certains des bras lorsqu'ils parcourent la section correspondante de l'ébauche au cours du retroussage.

On prévoit également selon l'invention une installation de retroussage d'ébauches de pneumatique qui comprend :
- une base de réception d'une ébauche de pneumatique,
- des bras de retroussage,
- des moyens d'entrainement longitudinal des bras par rapport à l'ébauche parallèlement à un axe principal de l'ébauche,
- des moyens d'entrainement radial des bras par rapport à l'ébauche, et
- un organe de commande apte à commander les moyens d'entrainement longitudinal et les moyens d'entrainement radial indépendamment les uns des autres bras au moyen d'une consigne en vitesse.

Avantageusement, les moyens d'entrainement longitudinal et les moyens d'entrainement radial comprennent des actionneurs électriques.

Les actionneurs électriques autorisent un meilleur pilotage, ce qui permet de mieux maitriser la position des bras et la pression qu'ils appliquent sur la couche de gomme à tout instant.

On va maintenant décrire plusieurs modes de réalisation de l'invention à l'appui des dessins annexés sur lesquels :
- les figures 1 et 2 sont des vues en perspective d'une installation de retroussage d'ébauches de pneumatiques selon l'invention,
- les figures 3 et 4 sont des vues en coupe longitudinale de l'installation de la figure 1 dans des configurations différentes,
- la figure 5 est une vue en perspective selon un angle différent de l'installation de la figure 1,
- les figures 6 à 8 sont des vues en coupe longitudinale de l'installation de la figure 1 dans des configurations différentes,
- les figures 9 et 10 sont des représentations graphiques de deux trajectoires des bras permises par l'installation de la figure 1,
- la figure 11 illustre le déplacement des bras le long d'un flanc de l'ébauche,
- la figure 12 est un schéma illustrant le procédé de retroussage réalisé au moyen de l'installation de la figure 1,
- la figure 13 représente l'évolution des positions des bras en fonction du temps lors de la mise en œuvre d'un procédé de retroussage selon un deuxième mode de réalisation de l'invention,
- les figures 14 et 15 représentent l'évolution des positions des bras en fonction du temps lors de la mise en oeuvre d'un procédé de retroussage selon un premier mode de réalisation de l'invention, respectivement pour une ébauche classique et pour une ébauche dite « en oméga »,
- la figure 16 est une vue en coupe longitudinale d'une installation selon une variante de réalisation de l'invention,
- la figure 17 est une vue en perspective de l'installation de la figure 16,
- les figures 18 à 20 illustrent un coulissement d'une base de l'installation de la figure 16,
- les figures 21 à 23 illustrent un coulissement d'un organe de connexion principal de l'installation de la figure 16, et
- les figures 24 à 26 illustrent un coulissement d'un organe de connexion secondaire de l'installation de la figure 16.

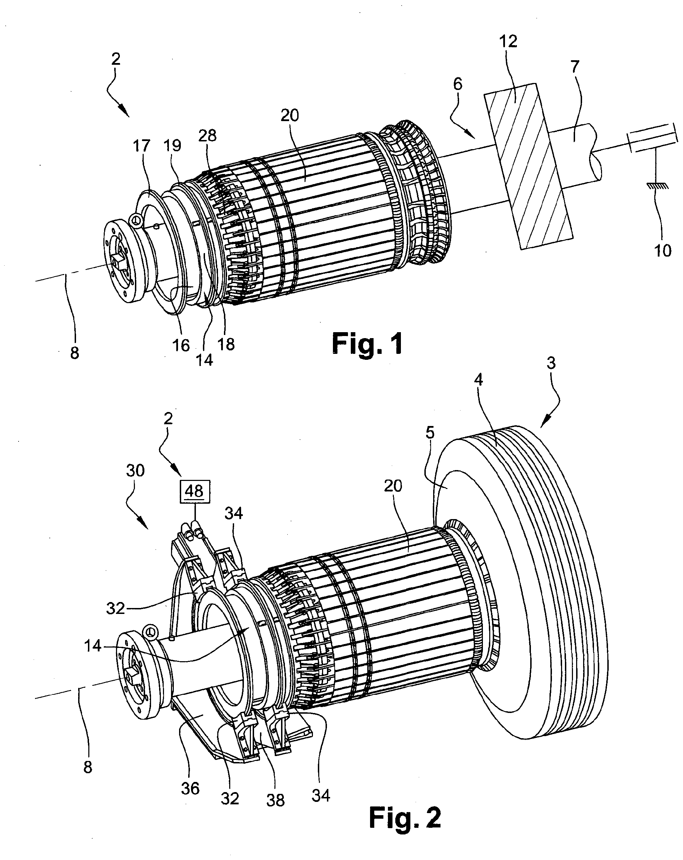

On a illustré en figures 1 et 2 une installation de retroussage d'ébauches de pneumatiques 2 selon l'invention. Cette installation 2 est destinée à réaliser un retroussage d'une ébauche crue de pneumatique 3 dotée d'un sommet 4 de forme générale proche de celle d'un cylindre et de deux flancs 5 situés de part et d'autre du sommet 4 et s'étendant en regard l'un de l'autre, depuis le sommet 5 et en direction d'un axe principal de l'ébauche 3. L'installation 2 est adaptée pour le retroussage de tout type de pneumatique.

L'installation 2 comprend une base de réception 6 d'une ébauche de pneumatique. Cette base de réception 6 comprend un fût 7, ici de forme générale cylindrique, présentant un axe principal 8. Le fût 7 est monté mobile en rotation par rapport à un bâti 10 de l'installation 2 autour de l'axe 8. Le fût 7 présente sur une face externe un socle 12, illustré schématiquement sur la figure 1 et destiné à recevoir l'ébauche 3 en vue de son retroussage. La base de réception 6 fait partie d'un tambour cylindrique d'axe 8 permettant la confection d'une ébauche de pneumatique en déposant successivement différentes couches à base d'élastomères, renforcées ou pas, ainsi que les éléments annulaires du talon. Un tel tambour comprend des gorges de réception circonférentielles extensibles radialement destinées à recevoir les talons d'une ébauche de carcasse et des éléments de type généralement connu permettant de réaliser la conformation de celle-ci.

Les éléments qui vont suivre se trouvent d'un côté du socle 12. Des éléments similaires et symétriques se trouvent de l'autre côté et ne seront pas décrits.

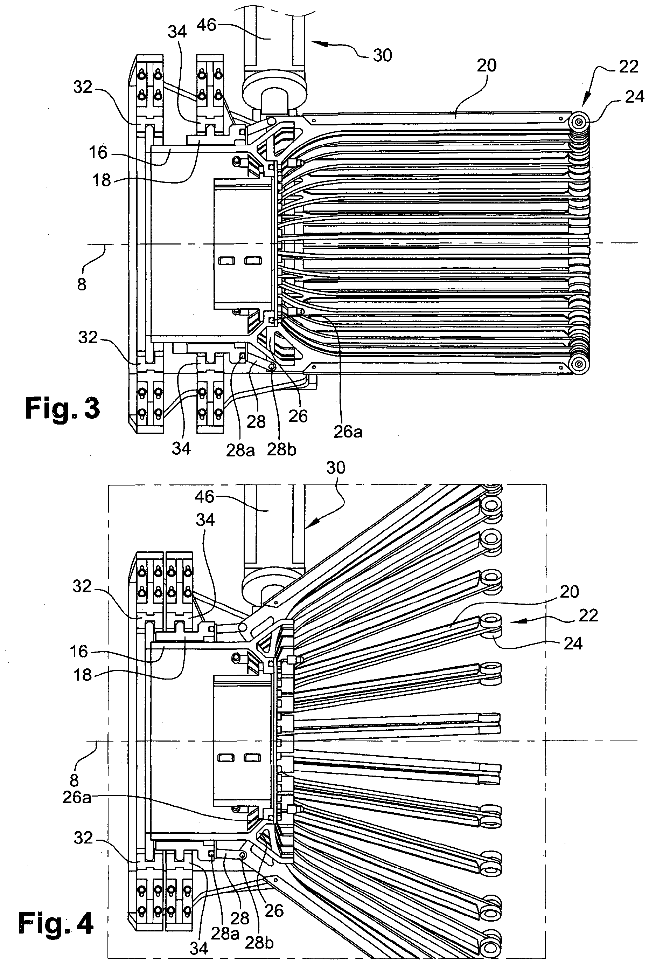

L'installation 2 comprend un support 14 monté coulissant par rapport au fût 7 coaxialement à ce dernier et sur ce dernier. Le support 14 est notamment illustré sur les figures 3 et 4.

Le support 14 comprend ici un premier organe de connexion 16, dit organe de connexion principal, monté coulissant par rapport au fût 7 coaxialement à ce dernier et sur ce dernier.

Une nervure annulaire, dite nervure principale 17, s'étend radialement en saille d'une face externe de l'organe de connexion principal 16 sur l'intégralité de sa circonférence.

Le support 14 comprend aussi un second organe de connexion 18, dit organe de connexion secondaire, monté coulissant par rapport à l'organe de connexion principal 16 coaxialement à ce dernier et sur ce dernier. L'organe de connexion secondaire 18 s'étend ainsi autour de l'organe de connexion principal 16 en le recouvrant en partie. Il présente toutefois une longueur parallèlement à l'axe 8 inférieure à celle de l'organe de connexion principal 16, si bien que l'organe de connexion secondaire 18 ne recouvre que partiellement l'organe de connexion principal 16 comme cela est notamment visible sur la figure 3.

L'organe de connexion principal 16 et l'organe de connexion secondaire 18 sont ici chacun formés par un manchon d'axe parallèle à l'axe 8. L'organe de connexion principal 16 sera désigné par l'expression « manchon principal » et l'organe de connexion secondaire 18 par l'expression « manchon secondaire ».

Une nervure annulaire, dite nervure secondaire 19, s'étend radialement en saille d'une face externe du manchon secondaire 18 sur l'intégralité de sa circonférence. La nervure secondaire 19 est plus proche du socle 12 que la nervure principale 17. On verra dans la suite quelles sont les fonctions des nervures principale 17 et secondaire 19.

L'installation 2 comprend plusieurs bras rectilignes 20 articulés sur le support 14. Chaque bras 20 présente une extrémité libre 22 destinée à venir au contact d'une couche de gomme crue en anneau fermé 23 à appliquer sur l'ébauche 3. Cette extrémité libre 22 est ici munie d'une roulette 24 pour rouletter la couche de gomme crue 23 lors de son application sur le flanc 5 de l'ébauche 3.

Chaque bras 20 est monté mobile en rotation par rapport au support 14. A cette fin, chaque bras 20 est ici directement articulé au support 14 par un pied 26 du bras, autour de l'axe 26a, qui s'étend dans une direction perpendiculaire à une partie principale du bras 20. Chaque bras 20 est également relié au support 14 au moyen d'une bielle 28 directement articulée d'une part au support 14 et d'autre part au bras 20, respectivement autour des axes 28a et 28b. Ici, chaque bras 20 est articulé directement au manchon principal 16 par le pied 26 du bras 20 et, indépendamment de cela, est relié au manchon secondaire 18 au moyen de la bielle 28. L'articulation des bras 20 aux manchons 16, 18 est notamment visible sur les figures 3 et 4.

Ainsi, lorsque le manchon secondaire 18 coulisse par rapport au manchon principal 16, il entraine les bras 20 en rotation grâce aux pieds 26 et aux bielles 28. Plus précisément, quand le manchon secondaire 18 s'éloigne des bras 20, il produit la levée des bras 20 qui s'éloignent de l'axe 8.

L'installation 2 comprend une station motorisée 30 externe à la base 6 et indépendante de celle-ci.

La station motorisée 30 comprend au moins une première fourche 32, dite fourche principale, apte à recouvrir et à déplacer la nervure principale 17 suivant la direction de l'axe 8. Elle comprend également au moins une seconde fourche 34, dite fourche secondaire, apte à recouvrir et à déplacer la nervure secondaire 19 suivant la direction de l'axe 8.

Les fourches principales 32 sont ici au nombre de deux et sont portées par une première plaque de support 36 de la station motorisée 30. De même, les fourches secondaires 34 sont ici au nombre de deux et sont portées par une seconde plaque de support 38 de la station motorisée 30. Les fourches 32, 34 et les plaques de support 36, 38 sont illustrées en figure 2. On peut prévoir de doter chaque plaque de support 36, 38 d'un nombre de fourches supérieur à deux dans le but d'améliorer la préhension des nervures principale 17 et secondaire 19.

Les plaques de support 36, 38 présentent ici chacune la forme d'un secteur de couronne s'étendant dans des plans perpendiculaires à l'axe 8 et sur une plage angulaire inférieure à 180°. Ici, les secteurs s'étendent sur une plage angulaire comprise entre 150° et 180°. Sur chaque secteur de couronne, les deux fourches sont placées à des extrémités libres des secteurs de couronne. De la sorte, les fourches sont pratiquement diamétralement opposées en considérant l'axe 8, ce qui permet d'optimiser la préhension des nervures principale 17 et secondaire 19.

La première plaque de support 36 est rigidement solidaire de la station motorisée 30. La seconde plaque de support 38 est elle montée coulissante par rapport à la première plaque de support 36 parallèlement à l'axe 8.

Grâce à la forme des fourches 32, 34 et des nervures 17, 19, la station motorisée 30 est apte à faire coulisser le manchon principal 16 et le manchon secondaire 18 par rapport au bâti 10 même lorsque le fût 7 est en train de tourner. En effet, la forme des fourches 32, 34 leur permet de ne pas empêcher la rotation des nervures 17, 19, et donc de ne pas empêcher celle des manchons 16 ,18. En d'autres termes, lorsque le fût 7 est en train de tourner, les nervures 17, 19 glissent dans leurs fourches 32, 34 respectives.

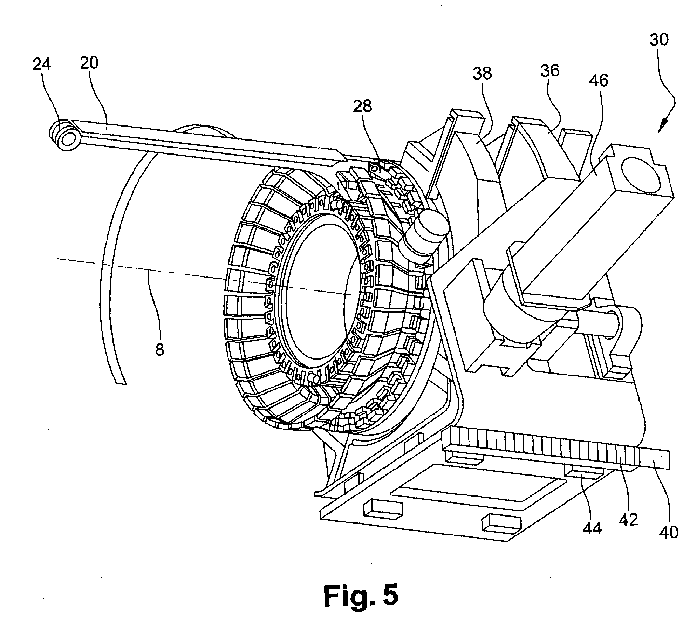

La station motorisée 30 comprend des moyens de poussée aptes à faire coulisser la première plaque de support 36, par rapport au bâti 10 parallèlement à l'axe 8 et aptes à faire coulisser la seconde plaque de support 38 par rapport à la première plaque de support 36 parallèlement à l'axe 8. Comme cela est illustré en figure 5, c'est un premier moteur électrique 40, couplé avec une crémaillère 42 guidée par des patins 44, qui fait coulisser la première plaque de support 36, et c'est un bloc moteur 46, comprenant ici un second moteur électrique, un réducteur et un mécanisme à vis et écrou (non représentés), qui fait coulisser la seconde plaque de support 38.

La station motorisée 30 est montée mobile entre une configuration active dans laquelle elle couplée avec les bras 20 et la base 6, au moyen des fourches 32, 34, et une configuration passive dans laquelle elle est découplée des bras 20 et de la base 6. Elle comprend par exemple à cette fin des moyens pour éloigner les plaques 36, 38 des bras 20 et de la base 6 ou les en rapprocher.

L'ensemble comprenant la base de réception 6, le support 14 et les bras 20 forme un tambour d'assemblage apte à coopérer avec la station motorisée 30 externe au tambour.

L'installation 2 comprend un organe de commande ou de pilotage 48 apte à piloter la station motorisée 30 pour commander une position des bras 20. L'organe de pilotage 48 comprend ici un ordinateur muni d'une unité centrale. Cette dernière contient un programme d'ordinateur comprenant des instructions de code aptes à commander l'exécution d'un procédé de retroussage tel qu'il sera décrit dans ce qui suit. Le programme d'ordinateur peut être stocké sur un support de stockage lisible par l'unité centrale de l'ordinateur.

On va maintenant décrire un procédé de retroussage mis en oeuvre par l'installation 2. Pour simplifier la présentation de ce procédé, on ne présentera que l'application d'une couche de gomme crue sur un des deux flancs 5. Le procédé s'applique symétriquement de la même manière des deux côtés de l'ébauche 3. On effectue en général le retroussage des deux côtés de l'ébauche 3 simultanément.

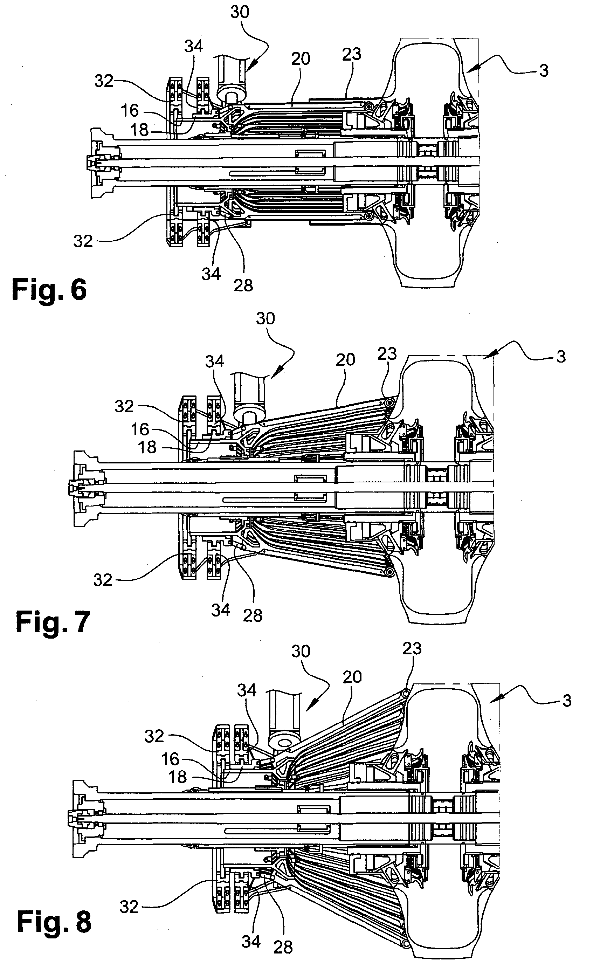

On installe d'abord l'ébauche 3 sur le socle 12 de la base 6. Il s'agit à ce stade d'une ébauche de carcasse de pneumatique. Chaque bras 20 occupe une position initiale dans laquelle l'extrémité libre 22 du bras 20 est éloignée de l'ébauche 3. Les bras 20 sont dans leur configuration la plus proche de l'axe 8 et sont parallèles à ce dernier et entre eux comme sur la figure 6, en formant un cylindre.

On place la couche de gomme en anneau fermé 23 sur les bras 20 de sorte qu'une extrémité de cette couche de gomme 23 soit en regard des extrémités libres 22 des bras qu'elle recouvre.

On approche ensuite la station motorisée 30 de la base de réception 7 et on l'accouple avec le support 14. Cela revient ici à placer les nervures principale 17 et secondaire 19 respectivement dans les fourches principales 32 et secondaires 34. La station motorisée 30 passe ainsi de la configuration passive à la configuration active.

Pour appliquer la couche de gomme 23 sur le flanc 5, on fait ensuite simultanément coulisser la station motorisée 30 par rapport au bâti 10 en direction de l'ébauche 3 et coulisser la seconde plaque de support 38 en direction de la première plaque de support 36, c'est-à-dire en l'éloignant de l'ébauche 3, grâce aux moyens de poussée décrits précédemment.

Ces deux coulissements sont pilotés par l'organe de pilotage 48. Celui-ci pilote ainsi les déplacements longitudinal et radial de l'extrémité libre 22 de chaque bras 20. Cela est possible car la position des extrémités libres des bras est fonction de la position des première 36 et seconde 38 plaques de support. En effet, grâce aux pieds 26 et aux bielles 28, un déplacement de la seconde plaque de support 38 par rapport à la première entraine la rotation des bras 20 et un coulissement de la première plaque de support 36 en direction de l'ébauche 3 entraine le coulissement des bras 20 parallèlement à l'axe 8.

Ces deux coulissements sont également commandés par l'organe de pilotage 48 en fonction d'une consigne. Dans un premier mode de réalisation de l'invention, parmi les déplacements longitudinal et radial des bras 20, on pilote un de ces déplacements en vitesse et on pilote l'autre de ces déplacements en effort. On choisit avantageusement de piloter le déplacement radial au moyen d'une consigne en vitesse et de piloter le déplacement longitudinal au moyen d'une consigne en effort. On maitrise ainsi pour chaque bras 20, quelle que soit sa position, l'intensité de l'effort qu'il applique sur la couche de gomme 23 et le flanc 5 de l'ébauche 3. On peut ainsi réaliser le déplacement radial des bras à une vitesse donnée jusqu'à ce qu'ils atteignent la position souhaitée par rapport à l'ébauche et ensuite arrêter le déplacement radial et continuer uniquement le déplacement axial jusqu'à atteindre la consigne d'effort préétablie sur l'ébauche. Un tel protocole de commande comportant des déplacements des bras suivis de pauses pour presser les composants les uns contre les autres permet à ces composants caoutchouteux de mieux adhérer ensemble au niveau des flancs de l'ébauche. On s'assure ainsi que la fixation de la couche de gomme 23 sur le flanc 5 se fasse de manière optimale.

Dans un deuxième mode de réalisation de l'invention, on pilote les déplacements longitudinal et radial des bras 20 au moyen d'une consigne en vitesse.

On passe alors à la configuration illustrée en figure 7, dans laquelle la couche de gomme 23 est partiellement appliquée sur le flanc 5 de l'ébauche 3. Les première et seconde plaques de support 36, 38 forment ainsi respectivement des moyens d'entrainement en coulissement et en rotation des bras 20. On comprend également que la rotation des bras se fait indépendamment du coulissement des bras.

Au cours de ce mouvement, les extrémités des bras 20 parcourent le flanc 5 en direction radiale à l'axe 8, en direction opposée à ce dernier, c'est-à-dire en direction du sommet 4 de l'ébauche 3, et ce faisant appliquent la couche de gomme 23 sur le flanc 5.

En continuant les deux coulissements, on arrive finalement à la configuration illustrée en figure 8 dans laquelle la couche de gomme 23 recouvre complètement le flanc 5. On découple alors la station motorisée du support 14, ce qui revient à ôter les nervures 17, 19 des fourches 32, 34, et on l'éloigne de la base de réception 7. La station motorisée 30 passe ainsi de la configuration active à la configuration passive, en attente de sa prochaine utilisation.

Grâce au fait que la station motorisée 30 est externe à la base 6 et indépendante de celle-ci, on peut doter les deux côtés de l'installation 2, c'est-à-dire de part et d'autre du socle 12, de deux stations motorisées pilotées différemment l'une de l'autre. L'installation 2 permet ainsi le retroussage d'ébauches de pneumatiques ayant des profils différents et dissymétriques.

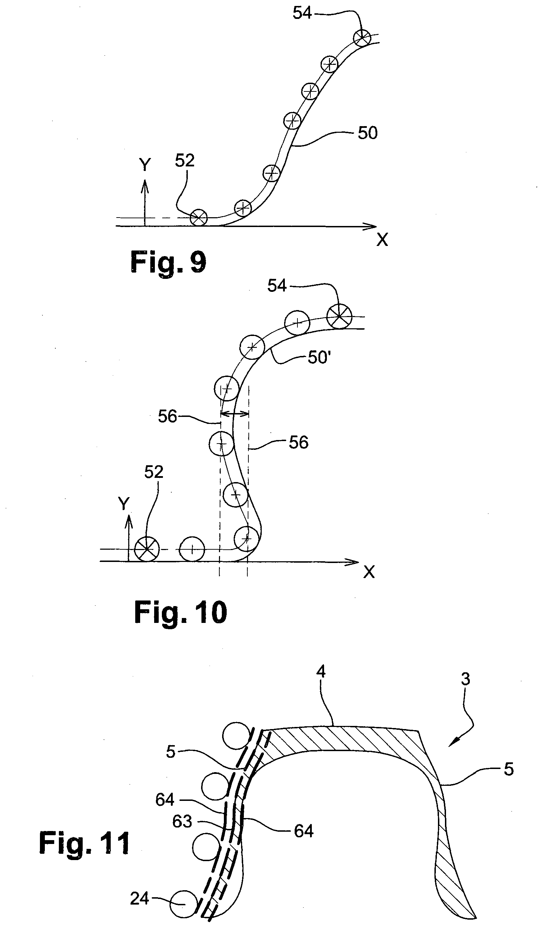

On a illustré en figure 9 un premier exemple de trajectoire 50, dans lequel on suit l'évolution de la position de l'extrémité libre 22 d'un bras 20 dans un repère orthogonal dont l'origine est un point du bâti 10 et dont les axes X et Y sont respectivement l'axe principal 8 et un axe radial à l'axe 8. Au cours du mouvement de l'extrémité libre 22 du bras 20, cette extrémité 22 avance constamment pendant qu'elle s'éloigne constamment de l'axe 8, les deux mouvements étant monotones, entre une position initiale 52 correspondant à la configuration illustrée en figure 5 et une position finale 54 correspondant à la configuration illustrée en figure 7.

On a illustré en figure 10 un second exemple de trajectoire 50'. Celui-ci diffère du premier exemple en ce que, dans une portion de la trajectoire du bras 20, son extrémité libre 22 présente une composante de mouvement qui l'éloigne d'un plan équatorial de l'ébauche 3, c'est-à-dire parallèle à l'axe principal 8. Cette composante de mouvement correspond à un recul du manchon principal 16 parallèlement à l'axe principal 8. Cette portion est délimitée par les deux traits discontinus 56. Autrement dit, au cours de son mouvement, l'extrémité libre 22 avance, puis recule puis avance de nouveau suivant cet axe 8. Cela a lieu pendant que l'extrémité 22 s'éloigne de l'axe 8 de façon monotone. Cette trajectoire 50' est utilisée lorsque le type d'ébauche à retrousser l'impose, par exemple s'il s'agit d'une ébauche dite « en oméga ».

On a représenté en figure 11 le déplacement de la roulette 24 d'un des bras 20 le long d'un des flancs 5 de l'ébauche. On a particulièrement illustré dans cette figure le fait que, en pratique, la roulette 24 ne suit pas exactement sa trajectoire prédéterminée théorique, représentée par le trait discontinu 63, mais suit une trajectoire comprise dans un voisinage de cette trajectoire, ici borné par les traits discontinus 64. Cela est notamment dû au fait que l'ébauche 3 est constituée d'un matériau souple qui se déforme donc facilement lors du roulettage par les roulettes 24. Le déplacement des bras 20 étant commandé en fonction d'une consigne d'intensité de l'effort appliqué par des bras 20 sur l'ébauche, on s'affranchit de cette imprécision relative de la position réelle des roulettes 24.

Dans l'exemple décrit, on utilise des actionneurs électriques qui permettent un pilotage aisé et précis de l'effort appliqué par le biais de l'intensité absorbée par le moteur électrique, selon la formule C = k.l, où C est le couple produit par le moteur en Nm, k une constante et I l'intensité du courant électrique traversant le moteur en A. De tels actionneurs électriques se prêtent aussi bien à un pilotage au moyen d'une consigne en vitesse qu'à un pilotage au moyen d'une consigne en effort.

Dans une variante, on utilise des vérins hydrauliques ou pneumatiques à la place des actionneurs électriques et on réalise un pilotage de l'effort appliqué par un pilotage de la pression appliquée par le piston du vérin, selon la formule P = F / S, où P est la pression du fluide, F est l'effort appliqué et S est la superficie de la section du piston.

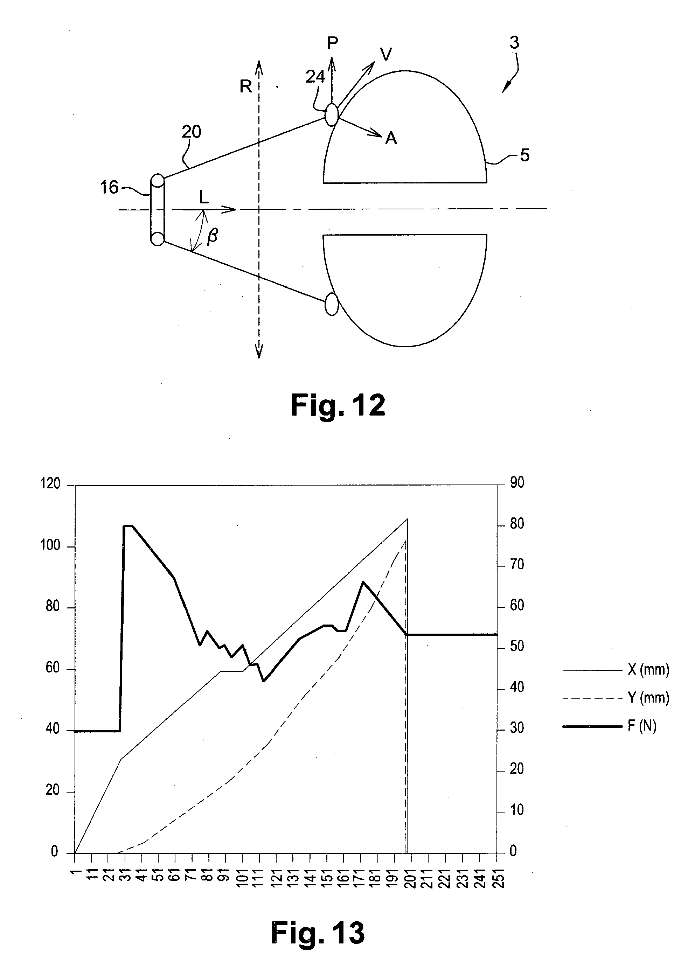

La figure 12 illustre de manière simplifiée la mise en oeuvre du procédé de retroussage au moyen de l'installation 2. Parmi les grandeurs symbolisées, L correspond au déplacement longitudinal des bras 20, R correspond au déplacement radial des bras 20, A correspond à l'effort normal d'applique des roulettes 24 subi par la couche de gomme 23 lors du retroussage, P correspond à l'effort nécessaire pour relever la couche de gomme 23, V est la vitesse de déplacement des roulettes 24 et β est l'angle formé entre les bras 20 et l'axe longitudinal.

Sur la figure 13 est représentée l'évolution de la position des bras 20 qui suivent une trajectoire telle qu'illustrée en figure 9 en fonction du temps lors de la mise en oeuvre du procédé de retroussage selon le deuxième mode de réalisation de l'invention.

Dans le cas du deuxième mode de réalisation, les déplacements L et R sont pilotés au moyen d'une consigne en vitesse. Cela permet de définir une trajectoire des roulettes 24 correspondant à la consigne au moyen de laquelle l'organe de commande 48 effectue le pilotage. L'effort d'applique A dépend de la différence entre la trajectoire des roulettes 24 et du profil de la couche de gomme 23. Si ce dernier ne correspond pas à la consigne de trajectoire, l'effort ne sera pas maitrisé. L'effort A dépend aussi de l'angle β, puisque l'effort sera plus important au début du retroussage qu'à la fin du retroussage du fait de la raideur de la couche de gomme 23.

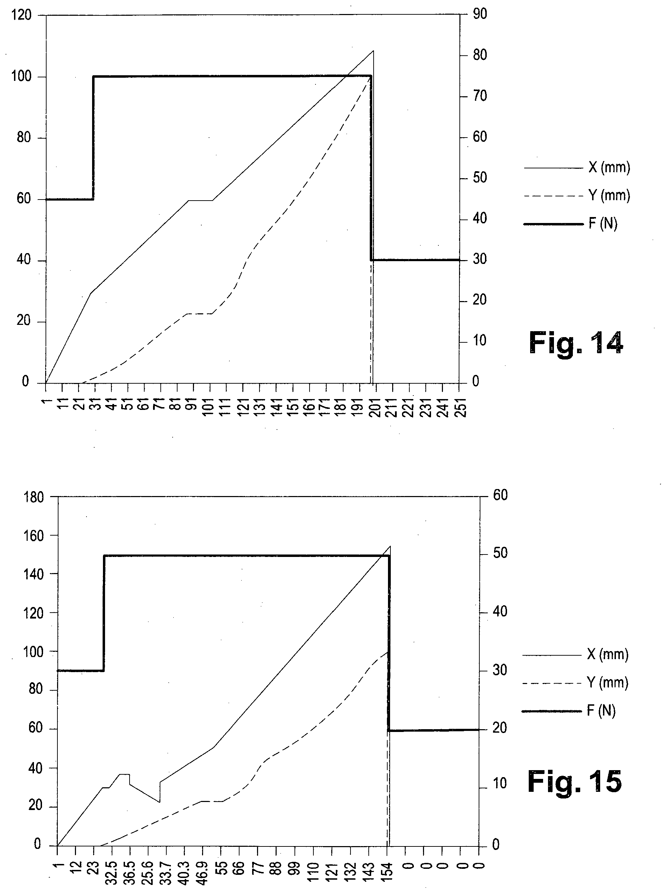

Sur la figure 14 est représentée l'évolution de la position des bras 20 qui suivent une trajectoire telle qu'illustrée en figure 9 en fonction du temps lors de la mise en oeuvre du procédé de retroussage selon le premier mode de réalisation de l'invention. Parmi L et R, le premier est piloté au moyen d'une consigne en effort et le deuxième au moyen d'une consigne en vitesse.

Dans le cas où c'est R qui est piloté en vitesse, la vitesse longitudinale L n'est pas pilotée mais dépend de la vitesse radiale R pilotée.

On peut également faire des pauses et appliquer un effort bien maîtrisé sur l'ébauche pendant le relevage.

La figure 15 est similaire à la figure 14, mais en diffère en ce que l'ébauche 2 faisant l'objet du retroussage a un profil « en oméga » tel qu'illustré en figure 11 On observe que selon l'axe longitudinal, la roulette 24 avance, puis recule puis avance de nouveau. Cela a lieu pendant que la roulette 24 s'éloigne de l'axe longitudinal de façon monotone.

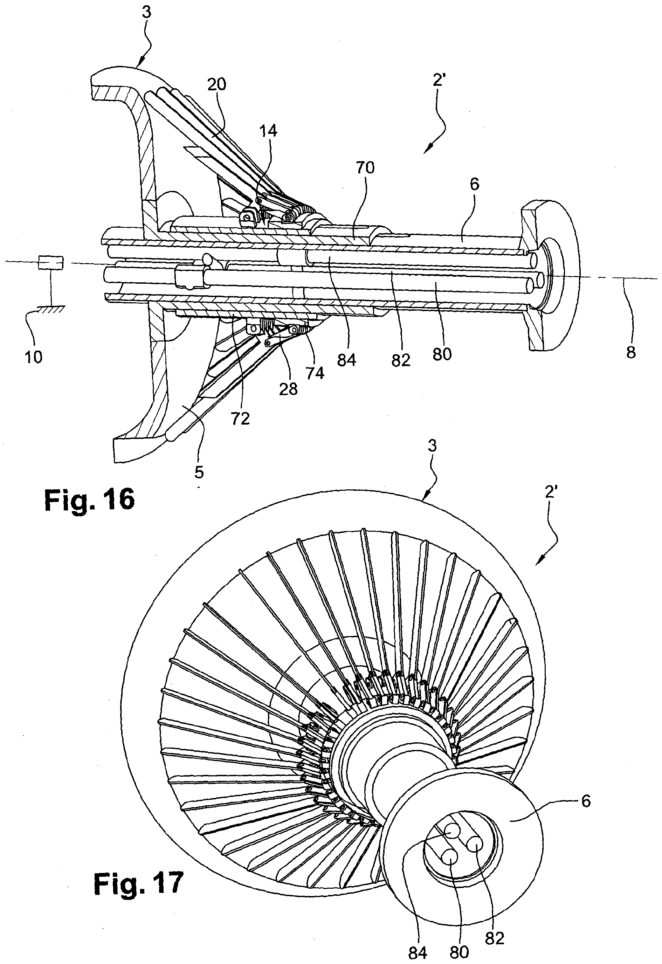

On a illustré en figures 16 et suivantes une installation de retroussage 2' selon une variante de réalisation de l'invention. On va présenter dans ce qui suit principalement les éléments qui la différencient de l'installation 2 présentée dans ce qui précède. Comme cela est visible sur les figures 16 et 17, l'installation 2' s'en démarque notamment en ce que les moyens d'entrainement des bras 20 respectivement en coulissement et en rotation sont logés à l'intérieur du fût 6. Cela permet de réduire l'encombrement de l'installation.

Les éléments portant les mêmes références numériques que dans ce qui précède sont identiques, au moins fonctionnellement.

L'installation 2' comporte une embase 70, ici en forme de manchon, montée coulissante sur le fût 6. Un des flancs 5 de l'ébauche 3 est fixé à l'embase 70. Le support 14 est monté coulissant sur l'embase 70. Le fût 6 est lui monté pivotant par rapport à un bâti 10 de l'installation 2'.

De manière similaire aux précédents modes de réalisation, le support 14 comprend un organe de connexion principal 72 monté coulissant par rapport à l'embase 70 parallèlement à l'axe principal 8. Le support 14 comprend aussi un organe de connexion secondaire 74 monté coulissant par rapport à l'organe de connexion principal 72 parallèlement à l'axe 8.

Les bras de retroussage 20 sont montés pivotants sur l'organe de connexion principal 72. Ils sont également reliés à l'organe de connexion secondaire 74 au moyen des bielles 28.

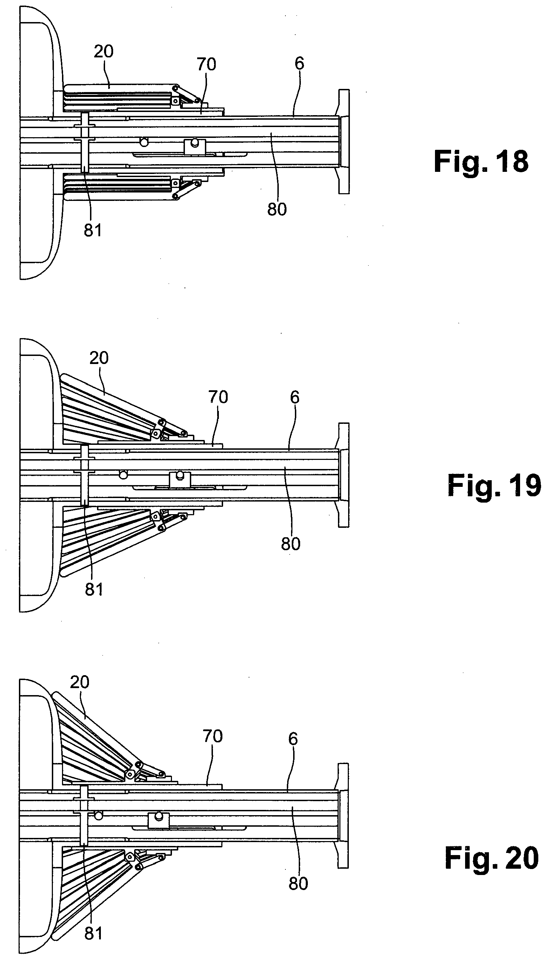

En référence aux figures 18 à 20, l'installation 2' comporte des premiers moyens d'entrainement 80 aptes à faire coulisser l'embase 70 parallèlement à l'axe 8 par rapport au fût 6. Ces moyens d'entrainement 80 sont situés à l'intérieur du fût 6.

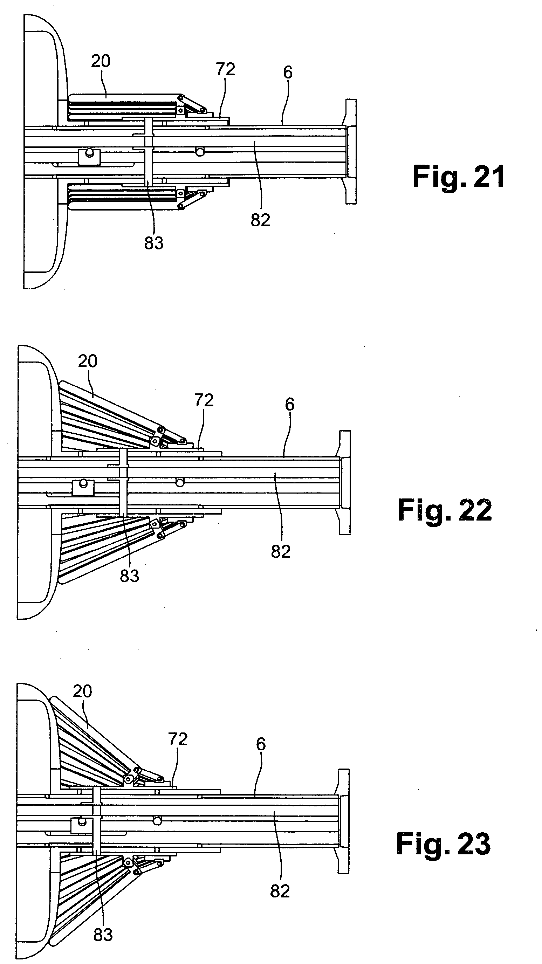

En référence aux figures 21 à 23, l'installation 2' comporte des deuxièmes moyens d'entrainement 82 aptes à faire coulisser l'organe de connexion principal 72 parallèlement à l'axe 8 par rapport au fût 6. Cela a pour effet de faire coulisser les bras de retroussage 20 parallèlement à l'axe 8 afin de les approcher ou les éloigner de l'ébauche 3.

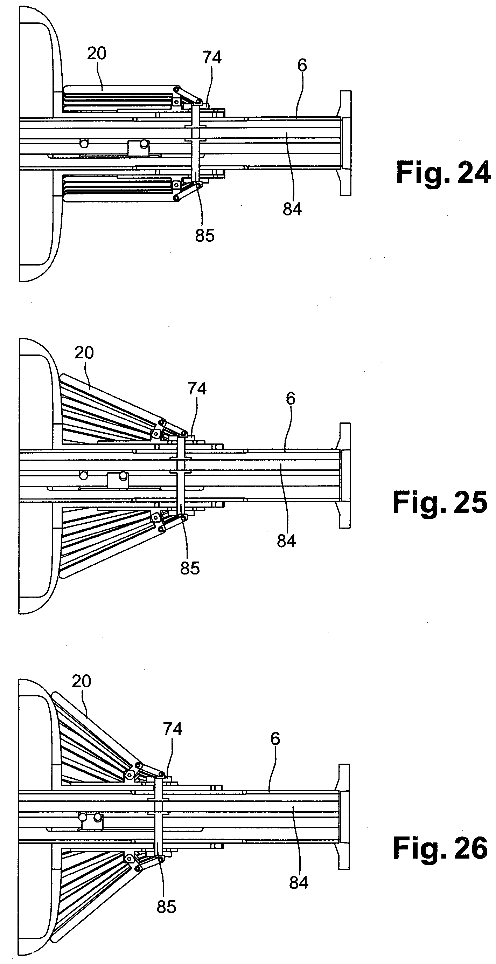

En référence aux figures 24 à 26, l'installation comporte des troisièmes moyens d'entrainement 84 aptes à faire coulisser l'organe de connexion secondaire 74 parallèlement à l'axe 8 par rapport au fût 6. Cela a pour effet de faire tourner les bras de retroussage 20, grâce aux bielles 28, afin de les approcher ou les éloigner du fût 6.

Les moyens d'entrainement 80, 82, 84 sont solidaires respectivement de l'embase 70, de l'organe de connexion principal 72 et de l'organe de connexion secondaire 74 au moyens de tiges 81, 83, 85 s'étendant dans des lumières du fût 6 dont une est visible sur la figure 17. Comme cela est visible sur la figure 16, les tiges sont agencées de sorte qu'elles n'entravent pas leurs déplacements respectifs.

Ici, les moyens d'entrainement 80, 82 et 84 sont chacun formés par un mécanisme vis-écrou. Ces derniers sont couplés à des moteurs (non représentés) placés sur le bâti 10 ou, dans une variante, à l'intérieur du fût 6. Les moteurs sont indépendants les uns des autres.

On peut envisager l'entraînement en rotation du fût 6 en même temps que le retroussage en plaçant des joints tournants au niveau des connecteurs électriques d'alimentation des moteurs.

Dans une variante également envisageable, les actionneurs peuvent être internes au tambour.

## Revendications

1. Procédé de retroussage d'une ébauche de pneumatique (3), dans lequel on commande indépendamment l'un de l'autre des déplacements longitudinal et radial, par référence à un axe principal (8) de l'ébauche (3), de bras de retroussage (20) afin d'appliquer un élément en gomme (23) sur au moins un flanc (5) de l'ébauche (3), **caractérisé en ce qu'**on pilote le déplacement radial des bras au moyen d'une consigne en vitesse.

2. Procédé selon la revendication précédente, dans lequel on impose une vitesse au déplacement radial et on impose un effort au déplacement longitudinal.

3. Procédé selon la revendication 1, dans lequel on impose une vitesse au déplacement longitudinal et on impose une vitesse au déplacement radial.

4. Procédé selon l'une quelconque des revendications précédentes, dans lequel on commande le déplacement radial des bras (20) en les faisant tourner par rapport à l'ébauche (3).

5. Procédé selon l'une quelconque des revendications précédentes, dans lequel on arrête le déplacement des bras (20) et on applique un effort prédéterminé sur l'ébauche.

6. Procédé selon l'une quelconque des revendications précédentes, dans lequel on déplace chaque bras (20) de sorte que, dans une portion de la trajectoire du bras (20), le bras (20) présente une composante de mouvement qui l'éloigne d'un plan équatorial de l'ébauche (3).

7. Installation de retroussage d'ébauches de pneumatique (2 ; 2'), comprenant :
- une base de réception (6) d'une ébauche de pneumatique (3),
- des bras de retroussage (20),
- des moyens d'entrainement longitudinal (36) des bras (20) par rapport à l'ébauche (3) parallèlement à un axe principal (8) de l'ébauche (3),
- des moyens d'entrainement radial (38) des bras (20) par rapport à l'ébauche (3), et
- un organe de commande (48) apte à commander les moyens d'entrainement longitudinal (36) et les moyens d'entrainement radial (38) indépendamment les uns des autres,
**caractérisée en ce que** l'organe de commande est en outre apte à piloter le déplacement radial des bras au moyen d'une consigne en vitesse.

8. Installation (2 ; 2') selon la revendication précédente, dans laquelle les moyens d'entrainement longitudinal (36) et les moyens d'entrainement radial (38) comprennent des actionneurs électriques.

## Patentansprüche

1. Umkrempelverfahren eines Reifenrohlings (3), wobei Längs- und Radialverschiebungen von Umkrempelarmen (20) unter Bezug auf eine Hauptachse (8) des Rohlings (3) unabhängig voneinander gesteuert werden, um ein Gummielement (23) auf mindestens eine Flanke (5) des Rohlings (3) aufzubringen, **dadurch gekennzeichnet, dass** die Radialverschiebung der Arme mittels eines Geschwindigkeitssollwerts gesteuert wird.

2. Verfahren nach dem vorhergehenden Anspruch, wobei der Radialverschiebung eine Geschwindigkeit und der Längsverschiebung eine Kraft vorgegeben wird.

3. Verfahren nach Anspruch 1, wobei der Längsverschiebung eine Geschwindigkeit und der Radialverschiebung eine Geschwindigkeit vorgegeben wird.

4. Verfahren nach einem der vorhergehenden Ansprüche, wobei die Radialverschiebung der Arme (20) gesteuert wird, indem sie bezüglich des Rohlings (3) gedreht werden.

5. Verfahren nach einem der vorhergehenden Ansprüche, wobei die Verschiebung der Arme (20) angehalten und eine vorbestimmte Kraft auf den Rohling ausgeübt wird.

6. Verfahren nach einem der vorhergehenden Ansprüche, wobei jeder Arm (20) so verschoben wird, dass der Arm (20) in einem Abschnitt der Strecke des Arms (20) eine Bewegungskomponente aufweist, die ihn von einer Äquatorialebene des Rohlings (3) entfernt.

7. Umkrempelanlage von Reifenrohlingen (2; 2'), die enthält:
- eine Aufnahmebasis (6) eines Reifenrohlings (3),
- Umkrempelarme (20),
- Einrichtungen für den Längsantrieb (36) der Arme (20) bezüglich des Rohlings (3) parallel zu einer Hauptachse (8) des Rohlings (3),
- Einrichtungen für den Radialantrieb (38) der Arme (20) bezüglich des Rohlings (3), und
- ein Steuerorgan (48), das die Längsantriebseinrichtungen (36) und die Radialantriebseinrichtungen (38) unabhängig voneinander steuern kann,
**dadurch gekennzeichnet, dass** das Steuerorgan außerdem die Radialverschiebung der Arme mittels eines Geschwindigkeitssollwerts steuern kann.

8. Anlage (2; 2') nach dem vorhergehenden Anspruch, wobei die Längsantriebseinrichtungen (36) und die Radialantriebseinrichtungen (38) elektrische Stellglieder enthalten.

## Claims

1. Method for turning up the plies of a green tyre (3), wherein longitudinal and radial movements, with reference to a main axis (8) of the green tyre (3), of ply-turning arms (20) are brought about independently of one another in order to apply a rubber element (23) to at least one sidewall (5) of the green tyre (3), **characterized in that** the radial movement of the arms is controlled by means of a speed setpoint.

2. Method according to the preceding claim, wherein a speed is applied to the radial movement and a force is applied to the longitudinal movement.

3. Method according to Claim 1, wherein a speed is applied to the longitudinal movement and a speed is applied to the radial movement.

4. Method according to any one of the preceding claims, wherein the radial movement of the arms (20) is brought about by rotating them with respect to the green tyre (3).

5. Method according to any one of the preceding claims, wherein the movement of the arms (20) is stopped and a predetermined force is applied to the green tyre (3).

6. Method according to any one of the preceding claims, wherein each arm (20) is moved such that, in a portion of the trajectory of the arm (20), the arm (20) has a movement component that moves it away from an equatorial plane of the green tyre (3).

7. Unit (2; 2') for turning up the plies of green tyres, that comprises:
- a base (6) for receiving a green tyre (3),
- ply-turning arms (20),
- means (36) for driving the arms (20) longitudinally with respect to the green tyre (3) parallel to a main axis (8) of the green tyre (3),
- means (38) for driving the arms (20) radially with respect to the green tyre (3), and
- a control member (48) that is able to control the longitudinal driving means (36) and the radial driving means (38) independently of one another,
**characterized in that** the control member is also able to control the radial movement of the arms by means of a speed setpoint.

8. Unit (2; 2') according to the preceding claim, wherein the longitudinal driving means (36) and the radial driving means (38) comprise electric actuators.
